# EUROPEAN PATENT APPLICATION

(11) **EP 3 900 975 A1**
(43) Date of publication of application: **27.10.2021**
(21) Application number: 20170792.4
(22) Date of filing: 22.04.2020
(51) Int. Cl.: B60L 53/16

(54) **CHARGING CONNECTION BETWEEN AN ELECTRICAL VEHICLE AND AN ELECTRIC VEHICLE SUPPLY EQUIPMENT, EVSE**

(71) Applicant: ABB Schweiz AG, 5400 Baden (CH)
(72) Inventor: Zoon, Wiebe, 2623 NM Delft (NL); Raaijmakers, Stefan, 2613 Delft (NL)
(74) Representative: Maiwald Patent- und Rechtsanwaltsgesellschaft mbH

(57) **Abstract**

The invention relates to a charging connection between an electrical vehicle (1) and an electric vehicle supply equipment, EVSE, (2) comprising a charging connector (3) for the electrical vehicle (1) or the EVSE (2) and a charging socket (5) for the EVSE (2) or the electrical vehicle (1), which corresponds to the charging connector (3), whereby the charging connector (3) and the charging socket (5) each comprise a plurality of corresponding charging current conductors (6) electrically connectable with each other by connecting the charging connector (3) and the charging socket (5), the charging connector (3) and the charging socket (5) each comprise a corresponding auxiliary conductor (7) electrically connectable with each other by connecting the charging connector (3) and the charging socket (5), whereby one of the auxiliary conductors (7) is electrically connected at the charging connector (3) or at the charging socket (5) to one of the charging current conductors (6), and a voltage measurement device (9) electrically connected in series at the charging socket (5) or at the charging connector (3) between the other one of the auxiliary conductors (7) and the other one of the charging current conductors (6).

## Description

### Technical Field

The invention relates to a charging connection between an electrical vehicle and an electric vehicle supply equipment, EVSE, comprising a charging connector for the electrical vehicle or the EVSE and a charging socket for the EVSE or the electrical vehicle, which corresponds to the charging connector, whereby the charging connector and the charging socket each comprise a plurality of corresponding charging current conductors electrically connectable with each other by connecting the charging connector and the charging socket. The invention further relates to a method for monitoring quality of a charging connection between an electrical vehicle and an electric vehicle supply equipment, EVSE, comprising a charging connector for the electrical vehicle or the EVSE and a charging socket for the EVSE or the electrical vehicle, which corresponds to the charging connector, whereby the charging connector and the charging socket each comprise a plurality of corresponding charging current conductors electrically connectable with each other by connecting the charging connector and the charging socket.

### Background Art

Electric vehicles have become very popular in many countries. Charging devices are being installed in public spaces such as parking lots or at private premises as charging infrastructure for charging said electric vehicles, EVs, with electrical energy. Said charging devices, often referred to as electric vehicle supply equipment, EVSE, are equipped with charging cables, which are plugged by means of a charging connector into a charging socket of the electric vehicle thereby forming a charging connection for the electrical energy. During a charging session with nowadays charging devices, currents of 500 A or more are applied onto the charging cable, charging connector and charging socket for enabling so called fast charging. Such fast charging often uses a Combined Charging System, CCS, protocol according to IEC 61851-23 and SAE J1772 standard for charging electric vehicles both in the US and in the European Union, EU. Other common charging protocols are CHAdeMO, GB or plain AC.

The quality of the charging connection is important for several reasons. If the charging connection fails, a battery pack of the electrical vehicle can be short-circuited by the charging connection and destroyed. Energy released in this case is considerable, and may lead to serious injury to bystanders. Further, the charging connector may be operated by non-trained persons that are not able to verify whether the charging connector and the charging socket are in good condition. Thus, it is the responsibility of the designers to make considerable effort to detect a bad charging connector or a bad charging socket. Even further, EVSEs are frequently open to the public, and located outdoor, for example in car parks. Some public EVSEs see very high usage, which gives ample opportunity for degradation of the charging connector. In sum, a need exists to monitor the quality of the charging connection in a simple and reliable manner.

### Summary of invention

It is therefore an object of the invention to provide a charging connection and a respective method for monitoring the quality of the charging connection in an accurate, simple and reliable manner.

The object of the invention is solved by the features of the independent claims. Modified implementations are detailed in the dependent claims.

Thus, the object is solved by a charging connection between an electrical vehicle and an electric vehicle supply equipment, EVSE, comprising
a charging connector for the electrical vehicle or the EVSE and a charging socket for the EVSE or the electrical vehicle, which corresponds to the charging connector, whereby
the charging connector and the charging socket each comprise a plurality of corresponding charging current conductors electrically connectable with each other by connecting the charging connector and the charging socket,
the charging connector and the charging socket each comprise a corresponding auxiliary conductor electrically connectable with each other by connecting the charging connector and the charging socket, whereby one of the auxiliary conductors is electrically connected at the charging connector or at the charging socket to one of the charging current conductors, and
a voltage measurement device electrically connected in series at the charging socket or at the charging connector between the other one of the auxiliary conductors and the other one of the charging current conductors.

It is therefore a key aspect of the invention to determine the quality of the charging connection between the electrical vehicle and the EVSE by providing the auxiliary conductor and by means of the auxiliary conductor measuring a voltage drop over the charging current conductors carrying the charging current. As said charging current is known, power losses in the charging connection carrying the charging current can be such wise determined. In other words, the proposed solution allows to measure a contact resistance between the charging connector and the charging socket over the auxiliary conductor in a charging application for charging electric vehicles. In even other words, the solutions consists of a smaller secondary contact, i.e. the auxiliary conductor, in parallel to the primary current conductor, i.e. the charging current conductor, which is preferably only provided within the charging connector and/or the charging socket. As this secondary contact is only used to measure the voltage drop over the charging connection between the electrical vehicle and the EVSE carrying the charging current at the charging connector and the charging socket, it does not carry considerable current itself, and therefore does not have a substantial voltage drop of its own.

The solution can be used to measure the voltage drop on one side of the charging connection either at the charging connector or at the charging socket, or on both sides of the charging connection carrying the charging current. Thus, the solution helps to determine a degraded charging connection carrying the charging current between the charging connector and the charging socket and thereby avoiding short-circuits in a battery pack of the electrical vehicle or serious injury to bystanders. The solution further helps to determine if the charging connector or the charging plug are damaged or degraded, for example due to misuse by non-trained persons. Prior art solutions often use temperature monitoring with temperature sensors, whereby, in order to detect problems with the connection, the temperature sensor needs to be in an exact spot the problem occurs. The proposed solution measuring total losses on the charging connection gives a faster and much more accurate picture of the health of the charging connection. The voltage measurement can be performed only inside the electrical vehicle or only inside the EVSE.

The electric vehicle supply equipment, EVSE, also referred to as electric vehicle, EV, charging station, electric recharging point, charging point, charge point, charge post or electronic charging station, ECS. The EVSE is an element in an infrastructure that supplies electric energy for recharging of electric vehicles, including electric cars, neighbourhood electric vehicles and plug-in hybrids, via a charging cable and a charging connector to the EV. EVSEs usually comply with standards for electric vehicle fast charging, such as the so-called Combined Charging System, CCS, protocol according to IEC 61851-23 and SAE J1772 standard for charging electric vehicles both in the US and in the European Union, EU. The Combined Charging System, CCS, protocol is a fast charging method for charging electric vehicles delivering high-voltage direct current via a charging connector derived from SAE J1772 standard (IEC Type 1) or IEC Type 2 connector. Automobile manufactures that support CCS include Jaguar, Volkswagen, General Motors, BMW, Daimler, Ford, FCA, Tesla and Hyundai. The CSS standard is con-trolled by the so called CharIN consortium. Besides other protocols such as, for example, CHAdeMO, as abbreviation of CHArge de Move, or GB/T, in particular according to 20234.3-2011 standard. The proposed solution can be advantageously used with even higher charging currents such as or more than 500A, 600A or 3000A, voltages such as or higher 1000V, 1500V or 3000V and/or in combination with newer standards not yet defined requiring higher currents. The charging connector, the charging socket each and/or the charging current conductors are preferably designed to carry such currents and/or voltages. In contrast thereto, the auxiliary conductor can be provided as pin i.e. not designed to carry such currents and/or voltages as the charging current conductor, for example having a much smaller diameter than the charging current conductor. The EVSE may comprise a converter and preferably a transformer connected to an AC, alternating current, grid for receiving electrical energy, which is transformed and/or converted to DC, direct current, for charging a battery of the electric vehicle connected via a DC bus to the EVSE. The electric vehicle can be provided as a motor car, a bus, a van, a truck, a tractor or any other electrically powered vehicle. The EVSE may comprise an outlet port connected to the DC bus, to which a charging cable is connected, for connecting to the electrical vehicle via the charging connector. The charging cable and/or the charging connector are preferably associated to charging standards, such as for instance CHAdeMO, CCS, GB, Tesla, etc., and/or are provided according to the standards described above. The EVSE may comprise a plurality of charging cables with respective charging connectors, for example each according to different charging standards. The charging connector is preferably provided as a plug, in particular as female plug, whereby the charging socket is preferably provided as a male socket, in particular arranged within a body of the electrical vehicle.

According to a preferred implementation the charging connection comprises a plurality of corresponding auxiliary conductors each associated to one of the charging current conductors. The proposed solution preferably has one auxiliary conductor per charging current conductor. Thus, in case of a DC connection with two charging current conductors, namely DC+ and DC- defining the DC bus, two auxiliary conductors are required in order to providing monitoring for the quality of all charging current conductors.

In another preferred implementation the charging connection comprises a resistor connected in series between the one of the auxiliary conductors and the one of the charging current conductors and/or between the other one of the auxiliary conductors and the other one of the charging current conductors. According to a preferred implementation the resistor is provided as fusible resistor, preferably with an appropriate rating. Preferably the resistor is provided in parallel to the voltage measurement device, provided for example as voltmeter. The resistor limits the current through the auxiliary connection provided by the auxiliary conductors, and acts as a voltage divider. In case of a complete failure of the charging current conductors, the voltage drops of the auxiliary conductors and thus the fusible resistor fails open.

Electrically connected at the charging connector and/or at the charging socket shall be understood that the electrical connection is provided in close vicinity to the charging connector and/or the charging socket, for example just beneath the charging connector and/or the charging socket. In another preferred implementation the one of the auxiliary conductors is electrically connected within the charging connector or within the charging socket to the one of the charging current conductors and the voltage measurement device is electrically connected in series within the charging socket or within the charging connector between the other one of the auxiliary conductors and the other one of the charging current conductors, or the charging connector and the charging socket each comprise a housing and the auxiliary conductors are electrically connected within the housing or adjacent outside to the housing to the charging current conductors. Thus, the electrical connection between the charging current conductor and the auxiliary conductor is ideally provided immediately close to the electrical connection of the DC bus.

According to a preferred implementation the charging connection comprises a measurement controller configured for measuring a voltage drop via the voltage measurement device and for determining if the voltage drop exceeds a threshold. The measurement controller is preferably provided as a computerized means, such as a computerized means, a computer or a microcontroller. The threshold is preferably predefined and may comprise for example 400 mV. The measurement controller may be provided within the electrical vehicle and/or within the EVSE.

In another preferred implementation the charging connection comprises a second voltage measurement device electrically connected in series at the charging connector or at the charging socket between the one of the auxiliary conductors and the one of the charging current conductors. Preferably, two measurement devices are provided, in particular the measurement device and the second measurement device, of which one is provided on the electrical vehicle side and one is provided on the EVSE side. Further preferably, each one identical resistor is connected in parallel to each one measurement device. Such way both the electrical vehicle's and the EVSE's voltage measurement devices can measure half of the voltage drop over the charging connection, and thermal losses inside the charging connection can be calculated from this voltage drop and the known charging current.

According to a preferred implementation the charging connector and the charging socket each comprise two corresponding charging current conductors, and whereby the charging connector and the charging socket each comprise one corresponding auxiliary conductor, whereby one of the auxiliary conductors is electrically connected to both of the charging current conductors, and the other one of the auxiliary conductors is connected to both of the other ones of the charging current conductors via a respective measuring device. With such implementation, in particular in case multiple current conductors are used for the same phase, an estimation of the connection quality can still be made using only one auxiliary contact.

The object is further solved by an electrical vehicle and/or electric vehicle supply equipment, EVSE, comprising a charging connection as described before. Such wise the electrical vehicle and/or electric vehicle supply equipment, EVSE, may comprise the voltage measurement device in order to determine the voltage drop of the charging connection provided by the charging current conductors.

The object is even further solved by a method for monitoring quality of a charging connection between an electrical vehicle and an electric vehicle supply equipment, EVSE, comprising
a charging connector for the electrical vehicle or the EVSE and a charging socket for the EVSE or the electrical vehicle, which corresponds to the charging connector, whereby
the charging connector and the charging socket each comprise a plurality of corresponding charging current conductors electrically connectable with each other by connecting the charging connector and the charging socket,
the charging connector and the charging socket each comprise a corresponding auxiliary conductor electrically connectable with each other by connecting the charging connector and the charging socket, whereby one of the auxiliary conductors is electrically connected at the charging connector or at the charging socket to one of the charging current conductors, and comprising the step of:
Measuring a voltage drop at the charging socket or at the charging connector between the other one of the auxiliary conductors and the other one of the charging current conductors.

The method allows measuring a contact resistance, namely the voltage drop, over an auxiliary contact, namely over the auxiliary conductors, in a charging application for charging electric vehicles, and thereby giving an accurate measurement of the quality of the charging connection carrying the charging current between the electrical vehicle and the EVSE via the charging connector and the charging socket.

In a preferred implementation the method comprises a second voltage measurement device electrically connected in series at the charging connector or at the charging socket between the one of the auxiliary conductors and the one of the charging current conductors, and comprising the step of:
Measuring a second voltage with the second voltage measurement device.

In another preferred implementation the method comprises the step of:
Measuring a charging current of at least one of the charging current conductors, and
Calculating thermal losses of the charging connection based on the voltage drop and the charging current.

In a preferred implementation the method comprises the step of:
Controlling delivery of a charging current according to the voltage drop, and/or
Stopping charging if the voltages drop exceeds a threshold.

In another preferred implementation the method comprises the step of:
Measuring a resistance at the charging socket or at the charging connector between the other one of the auxiliary conductors and the other one of the charging current conductors.

Such implementation allows for verifying functionality of the main connection of the charging current conductors and of the auxiliary connection of the auxiliary conductors.

In a preferred implementation the method comprises the step of:
Injecting a current pulse and/or current train between the other one of the auxiliary conductors and the other one of the charging current conductors prior to measuring the voltage drop.

In particular in case of a single sided connection, the monitoring side measuring the voltage drop can perform a resistance measurement over the voltage drop measurement, either before charging of the electrical vehicle starts, or by inserting an isolated current pulse once in a while over the voltage measurement. If the resistance measurement results in a voltage spike, the respective charging connection carrying the charging current can be considered broken. In case of double sided monitoring, the charging connection can be verified in a similar way. An isolated current pulse or pulse train can be injected onto the auxiliary conductor on one side. If both resistors are present and of the correct value, such An isolated current pulse or pulse train results in a specific voltage pulse on the measured voltage drop.

In another preferred implementation of the method the charging connector and the charging socket each comprise two corresponding charging current conductors, and whereby the charging connector and the charging socket each comprise one corresponding auxiliary conductor, whereby one of the auxiliary conductors is electrically connected to both of the charging current conductors, comprising the step of
Measuring the voltage drop at the charging socket or at the charging connector between the other one of the auxiliary conductors and both of the other ones of the charging current conductors.

Further implementations and advantages of the method are directly and unambiguously derived by the person skilled in the art from the charging connection as described before.

### Brief description of the drawings

These and other aspects of the invention will be apparent from and elucidated with reference to the implementations described hereinafter.

In the drawings:
Fig. 1 shows a charging connection between an electrical vehicle and an electric vehicle supply equipment, EVSE, in a schematical view according to a preferred implementation,
Fig. 2 shows a charging connection between an electrical vehicle and an electric vehicle supply equipment, EVSE, in a schematical view according to another preferred implementation, and

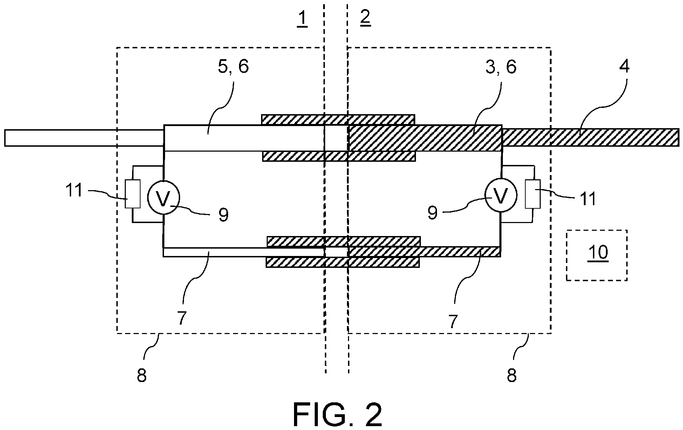

Fig. 2 shows a charging connection between an electrical vehicle and an electric vehicle supply equipment, EVSE, in a schematical view according to another preferred implementation.

### Detailed Description of exemplary implementations

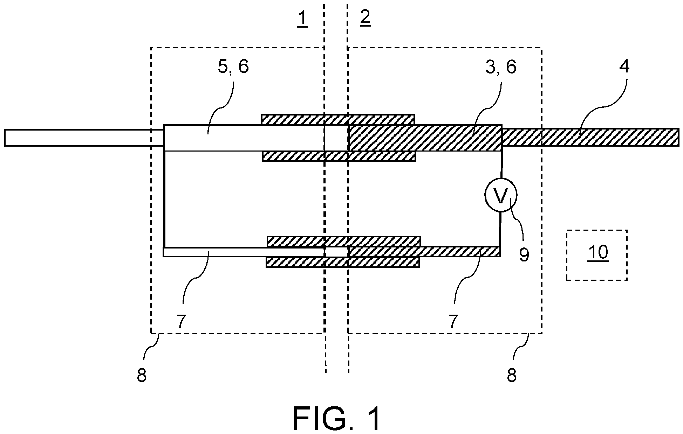

Fig. 1 shows a charging connection between an electrical vehicle 1 and an electric vehicle supply equipment, EVSE, 2, both only schematically shown. The charging connection comprises on side of the EVSE 2 a charging connector 3, which is connected via a cooled charging cable 4 to charger, not shown, thus forming the EVSE 2. The charging connector 3 is provided as a female plug and plugged, as can be seen in Fig. 1, into a corresponding male charging socket 5 arranged within a body, not shown, of the electrical vehicle 1, thereby establishing an electrical connection between the EVSE 2 and a battery, not shown, of the electrical vehicle 1 for charging said battery with electrical energy.

In detail, the charging connector 3 and the charging socket 5 each comprise a plurality of corresponding charging current conductors 6 electrically connected with each other thus forming a DC, direct current, bus having one DC+ and one DC-power conductor 6 for charging the electrical vehicle 1 with 500A and 1000V DC, while in Fig. 1 only the DC+ power conductor 6 is shown. Besides said high power charging current conductors 6 both the charging connector 3 and the charging socket 5 each comprise a corresponding auxiliary conductor 7, which are equally electrically connected with each other by connecting the charging connector 3 and the charging socket 4. The auxiliary conductors 7 comprise a much lower diameter than the high power charging current conductors 6 as they are not intended to carry charging current for charging the electrical vehicle 1.

Both the auxiliary conductors 7 are electrically connected to the respective charging current conductors 6 at the charging connector 3 respectively at the charging socket 5. In particular, both the charging connector 3 and the charging socket 5 comprise a housing 8, inside which the auxiliary conductors 7 and the charging current conductors 6 are provided and inside which the auxiliary conductors 7 are electrically connected to the respective charging current conductors 6. Alternatively, the auxiliary conductors 7 can be electrically connected to the respective charging current conductors 6 close outside immediately beneath the housing 8.

Inside the housing of the charging connector 3 a voltage measurement device 9 is provided, which electrically connected in series between the auxiliary conductor 7 and the charging current conductor 6 of the charging connector 3. The auxiliary conductor 7 thus is only used to measure a voltage drop over the charging connection. It does not carry considerable current itself, and therefore does not have a substantial voltage drop of its own.

Thus, by measuring the voltage drop with said voltage measurement device 9, power losses of the charging detection can be determined if the measured voltage drop a threshold. Said determination is carried out by a computerized measurement controller 10, which controls the voltage measurement device 9. In the implementation shown in Fig. 1, both the voltage measurement device 9 and the measurement controller 10 are installed within the EVSE 2. Alternatively, the voltage measurement can be done on the electrical vehicle 1-side, not shown.

In case of a single sided measurement as shown in Fig. 1, the auxiliary conductor 7 can be connected either directly, as shown in Fig. 1 at the electrical vehicle 1-side, to the charging current conductor 6, or, as shown in Fig. 2, over a resistor 11 having an impedance of exemplary 100Ωk to 1MΩ. In the implementation shown in Fig. 2 both on the electrical vehicle 1-side and on the EVSE 2-side the respective auxiliary conductor 7 is connected to the respective charging current conductor 6 via a respective voltage measurement device 9, which is connected in parallel to a respective resistor 11. The resistors 11 limit the current through the respective auxiliary conductor 7 and act as a voltage divider, whereby the resistor 11 is provided as fusible resistor 11. In case of a complete failure of the charging current conductor 6, the voltage drops over the auxiliary conductor 7 and the fusible resistor 11 fails open.

If both resistors 11 are chosen to have the same value, both the electric vehicle 1 and the EVSE 2 can measure half the voltage drop over the charging connection. The thermal losses inside the charging connection can be calculated from this voltage drop and the known charge current. In order to obtain most accurate measurements, the auxiliary conductors 7 are connected to the voltage measurement devices 9 at a respective base of the charging connector 3 and the charging socket 5, thus upmost away from a point of attachment of the charging connector 3 and the charging socket 5.

While Fig. 1 shows only the DC+ charging current conductor 6, a separate auxiliary conductor 7 is associated to each charging current conductor 6. Thus, per DC charging current conductor 6 a respective auxiliary conductor 7 is provided. For example, in case of a charging connector 3 with two charging current conductors 6 two respective auxiliary conductors 7 are provided.

In order to verify the validity of the connection of the charging current conductors 6 and auxiliary conductors 7 between the charging connector 3 and the charging socket 5, in case of a single sided connection as shown in Fig. 1, the monitoring side i.e. the EVSE 2-side, can perform a resistance measurement over the voltage measurement, either before charging the electric vehicle 1 starts, or by inserting an isolated current pulse once in a while over the voltage measurement. If the isolated current pulse gives a voltage spike, the charging connection between the electrical vehicle 1 and the EVSE 2 respectively provided by charging current conductors 6 of the charging connector 3 and the charging socket 5 is broken.

In case of double sided monitoring, as shown in Fig. 2, the validity of the charging connection can be verified in a similar way. An isolated current pulse or pulse train can be injected onto one auxiliary conductor 7 on one side. If both resistors 11 are present as shown in Fig. 2 and of identical value, the current pulse or pulse train results in a specific voltage pulse on the measured voltage.

Based on an increase of the measured resistance, a temperature of the charging current conductors 6 can be estimated without using a temperature sensor. A threshold can be instated based on this contact resistance of the charging current conductor 6 to stop charging, or it can even be used to regulate the charge current as to not exceed a specific contact temperature. Advantage of this method over a traditional temperature measurement is that excess heat generation in the charging current conductors 6 is detected before the charging connection becomes overheated of fails.

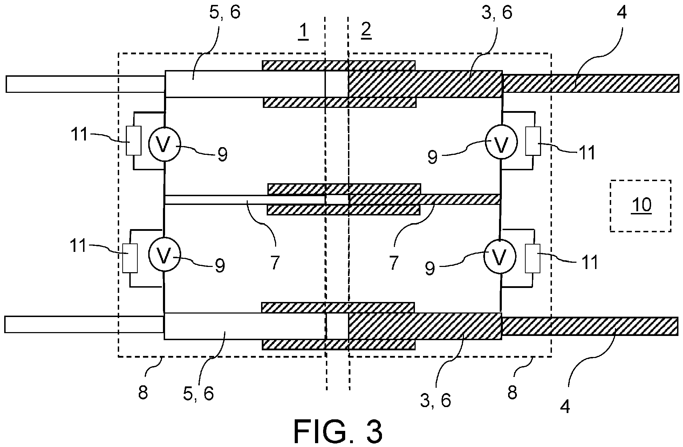

In case multiple charging current conductors 6 are used for the same phase in the charging connector 3 respectively in the charging socket 5, as shown in Fig. 3, an estimation of the connection quality can still be made using only one auxiliary conductor 7. Thereby, the charging connector 3 and the charging socket 5 each comprise two corresponding charging current conductors 6 and the charging connector 3 and the charging socket 5 each comprise one corresponding auxiliary conductor 7, whereby one of the auxiliary conductors 7 is electrically connected to both of the charging current conductors 6, and the other one of the auxiliary conductors 7 is connected to both of the other ones charging current conductors 6 via a respective measuring device 9 and a resistor 11 connected parallel thereto.

While the invention has been illustrated and described in detail in the drawings and foregoing description, such illustration and description are to be considered illustrative or exemplary and not restrictive; the invention is not limited to the disclosed implementations. Other variations to be disclosed implementations can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

### Reference signs list

- 1: electrical vehicle
- 2: electric vehicle supply equipment, EVSE
- 3: charging connector
- 4: charging cable
- 5: charging socket
- 6: charging current conductor
- 7: auxiliary conductor
- 8: housing
- 9: voltage measurement device
- 10: measurement controller
- 11: resistor

## Claims

1. Charging connection between an electrical vehicle (1) and an electric vehicle supply equipment, EVSE, (2) comprising
a charging connector (3) for the electrical vehicle (1) or the EVSE (2) and a charging socket (5) for the EVSE (2) or the electrical vehicle (1), which corresponds to the charging connector (3), whereby
the charging connector (3) and the charging socket (5) each comprise a plurality of corresponding charging current conductors (6) electrically connectable with each other by connecting the charging connector (3) and the charging socket (5),
the charging connector (3) and the charging socket (5) each comprise a corresponding auxiliary conductor (7) electrically connectable with each other by connecting the charging connector (3) and the charging socket (5), whereby one of the auxiliary conductors (7) is electrically connected at the charging connector (3) or at the charging socket (5) to one of the charging current conductors (6), and
a voltage measurement device (9) electrically connected in series at the charging socket (5) or at the charging connector (3) between the other one of the auxiliary conductors (7) and the other one of the charging current conductors (6).

2. Charging connection according to the previous claim, comprising a plurality of corresponding auxiliary conductors (7) each associated to one of the charging current conductors (6).

3. Charging connection according to any of the previous claims, comprising a resistor (11) connected in series between the one of the auxiliary conductors (7) and the one of the charging current conductors (6) and/or between the other one of the auxiliary conductors (7) and the other one of the charging current conductors (6).

4. Charging connection according to the previous claim, whereby the resistor (11) is provided as fusible resistor (11).

5. Charging connection according to any of the previous claims, whereby the one of the auxiliary conductors (7) is electrically connected within the charging connector (3) or within the charging socket (5) to the one of the charging current conductors (6) and the voltage measurement device (9) is electrically connected in series within the charging socket (5) or within the charging connector (3) between the other one of the auxiliary conductors (7) and the other one of the charging current conductors (6), or whereby the charging connector (3) and the charging socket (5) each comprise a housing (8) and the auxiliary conductors (7) are electrically connected within the housing (8) or adjacent outside to the housing (8) to the charging current conductors (6).

6. Charging connection according to any of the previous claims, comprising a measurement controller (10) configured for measuring a voltage drop via the voltage measurement device (9) and for determining if the voltage drop exceeds a threshold.

7. Charging connection according to any of the previous claims, comprising a second voltage measurement device (9) electrically connected in series at the charging connector (3) or at the charging socket (5) between the one of the auxiliary conductors (7) and the one of the charging current conductors (6).

8. Charging connection according to any of the previous claims, whereby the charging connector (3) and the charging socket (5) each comprise two corresponding charging current conductors (6), and whereby the charging connector (3) and the charging socket (5) each comprise one corresponding auxiliary conductor (7), whereby one of the auxiliary conductors (7) is electrically connected to both of the charging current conductors (6), and the other one of the auxiliary conductors (7) is connected to both of the other ones of the charging current conductors (6) via a respective voltage measuring device (9).

9. Electrical vehicle (1) and/or electric vehicle supply equipment, EVSE, (2) comprising a charging connection according to any of the previous claims.

10. Method for monitoring quality of a charging connection between an electrical vehicle (1) and an electric vehicle supply equipment, EVSE, (2) comprising
a charging connector (3) for the electrical vehicle (1) or the EVSE (2) and a charging socket (5) for the EVSE (2) or the electrical vehicle (1), which corresponds to the charging connector (3), whereby
the charging connector (3) and the charging socket (5) each comprise a plurality of corresponding charging current conductors (6) electrically connectable with each other by connecting the charging connector (3) and the charging socket (5),
the charging connector (3) and the charging socket (5) each comprise a corresponding auxiliary conductor (7) electrically connectable with each other by connecting the charging connector (3) and the charging socket (5), whereby one of the auxiliary conductors (7) is electrically connected at the charging connector (3) or at the charging socket (5) to one of the charging current conductors (6), and comprising the step of:
Measuring a voltage drop at the charging socket (5) or at the charging connector (3) between the other one of the auxiliary conductors (7) and the other one of the charging current conductors (6).

11. Method according to the previous method claim, comprising a second voltage measurement device (9) electrically connected in series at the charging connector (3) or at the charging socket (5) between the one of the auxiliary conductors (7) and the one of the charging current conductors (6), and comprising the step of:
Measuring a second voltage with the second voltage measurement device (9).

12. Method according to any of the previous method claims, comprising the step of:
Measuring a charging current of at least one of the charging current conductors (6), and
Calculating thermal losses of the charging connection based on the voltage drop and the charging current.

13. Method according to any of the previous method claims, comprising the step of:
Controlling delivery of a charging current according to the voltage drop, and/or
Stopping charging if the voltages drop exceeds a threshold.

14. Method according to any of the previous method claims, comprising the step of:
Measuring a resistance at the charging socket (5) or at the charging connector (3) between the other one of the auxiliary conductors (7) and the other one of the charging current conductors (6), and/or
Injecting a current pulse and/or current train between the other one of the auxiliary conductors (7) and the other one of the charging current conductors (6) prior to measuring the voltage drop.

15. Method according to any of the previous method claims, whereby the charging connector (3) and the charging socket (5) each comprise two corresponding charging current conductors (6), and whereby the charging connector (3) and the charging socket (5) each comprise one corresponding auxiliary conductor (7), whereby one of the auxiliary conductors (7) is electrically connected to both of the charging current conductors (6), comprising the step of
Measuring the voltage drop at the charging socket (5) or at the charging connector (3) between the other one of the auxiliary conductors (7) and both of the other ones of the charging current conductors (6).
